# EUROPÄISCHE PATENTSCHRIFT

(11) **EP 1 672 648 B1**
(45) Veröffentlichungstag und Bekanntmachung des Hinweises auf die Patenterteilung: **14.03.2007**
(21) Anmeldenummer: 04029525.5
(22) Anmeldetag: 14.12.2004
(51) Int. Cl.: G12B 21/02

(54) **Rasterkraftsonde mit einer EBD-Abtastspitze.**
SPM-probe with an EBD-tip.
Sonde pour SPM avec une pointe deposée per EBD.

(43) Veröffentlichungstag der Anmeldung: 21.06.2006
(73) Patentinhaber: Nanoworld AG, 2007 Neuchâtel (CH)
(72) Erfinder: Krause, Oliver, Dr., 91052 Erlangen (DE); Lehrer, Christoph, 97776 Aschfeld (DE); Petersen, Silke, 90419 Nürnberg (DE)
(74) Vertreter: Klocke, Peter

(56) Entgegenhaltungen:
- EP-A- 1 278 055
- WO-A-00/19494
- AKAMA Y ET AL: "MEW SCANNING TUNNELING MICROSCOPY TIP FOR MEASURING SURFACE TOPOGRAPHY" JOURNAL OF VACUUM SCIENCE AND TECHNOLOGY: PART A, AMERICAN INSTITUTE OF PHYSICS. NEW YORK, US, Bd. 8, Nr. 1, Januar 1990 (1990-01), Seiten 429-433, XP000117319 ISSN: 0734-2101

## Beschreibung

Die vorliegende Erfindung betrifft einen SPM-Sensor für ein Raster-Kraft-Mikroskop mit einem Biegebalken, einem Halteelement an einem Ende des Biegebalkens und einer Sensorspitze am anderen Ende des Biegebalkens und mit einer aus der Sensorspitze hervorragenden, zumindest teilweise zylindrischen EBD-Abtastspitze sowie ein Verfahren zur Herstellung derartiger Sensoren.

Raster-Sonden-Mikroskope sind allgemein bekannt und werden in der Praxis benutzt, um mit feinen Sensoren bis hin zu atomarer Auflösung die Oberflächen von Proben abzutasten. Raster-Sonden-Mikroskope umfassen Raster-Kraft-Mikroskope, sogenannte SPM (scanning probe microscope) und AFM (atomic force microscope), sowie Raster-Tunnel-Mikroskope, sogenannte STM (scanning tunnelling microscope), die ebenfalls allgemein bekannt sind. Bei Raster-Kraft-Mikroskopen werden Sensoren eingesetzt, die aus einem Mikrobiegebalken, im Nachfolgenden Cantilever genannt, bestehen, der an seinem einen Ende ein Halteelement und am anderen Ende eine Sensorspitze aufweist, mit der die Probe abgetastet wird. Bei der Rasterkraftmikroskopie wird die Abtastspitze so nahe an die zu untersuchende Oberfläche herangebracht, bis die Sonde in Wechselwirkung mit der zu untersuchenden Oberfläche tritt. Aufgrund der zwischen Abtastspitze und Oberfläche wirkenden atomaren Kräfte wird der Biegebalken des Sensors ausgelenkt. Die Detektion dieser Verbiegung ermöglicht die Messung der Topographie und anderer Eigenschaften der Oberfläche der Probe.

Die Auflösung wird hierbei durch die Form der Sondenspitze bestimmt, die bei der Messung mit der Probenoberfläche in Wechselwirkung tritt. Das Ergebnis einer Messung mit dem Raster-Kraft-Mikroskop ist stets eine Faltung aus der Form der Rasterkraftsonde und der tatsächlichen Form der Probenoberfläche. Die Sensorspitze ist, bedingt durch den Herstellungsprozess, pyramiden-, kegel- oder zylinderförmig ausgebildet und besitzt im allgemeinen eine Höhe von einigen (typischerweise 5-20) Mikrometern und einen typischen Öffnungswinkel von 20 bis 70 Grad. Das maximale Auflösungsvermögen derartiger Sensoren bei der Messung der Topographie einer Probenoberfläche liegt in Bereich von unter einem bis zu einigen Nanometern. Durch die Geometrie der Rasterkraftsonden ist es daher besonders bei Proben mit ausgeprägter Topographie und Strukturen mit hohem Aspektverhältnis nicht möglich, die reale Form der Oberfläche wiederzugeben. Zur Detektion feiner Strukturen und Gräben kann das Auflösungsvermögen eines Sensors deutlich verbessert werden, indem der Öffnungswinkel der Sensorspitze verkleinert wird. Es ist bekannt, den wirksamen Öffnungswinkel der Sensorspitze durch Abscheidung einer zusätzlichen nadelförmigen Abtastspitze, im Nachfolgenden EBD-Abtastspitze genannt, auf der Mantelfläche der Sensorspitze zu verkleinern und somit das Auflösungsvermögen zu verbessern. Diese speziell geformte EBD-Abtastspitze wird durch den Beschuss der Sondenspitze im Vakuum mit Elektronen und der dadurch induzierten Abscheidung von Material (Verunreinigung, Gasatome bzw. Moleküle, üblicherweise Kohlenstoff bzw. organische Kohlenstoffverbindungen) an der durch die Elektronen bestrahlten Stelle, hergestellt. Dieser Effekt wird als Elektronenstrahl induzierte Abscheidung (electron beam induced deposition, EDID oder kürzer EBD) bezeichnet und wurde bereits vielfältig veröffentlicht.

Beim Abtasten der Probenoberfläche mit der Sonde bzw. mit der EBD-Abtastspitze wirken große Kräfte auf die EBD-Abtastspitze ein. Um den Kräften standhalten zu können bzw. um eine hohe Lebensdauer der aufgewachsenen Spitze zu erhalten, muss die nadelförmige EBD-Abtastspitze mit der Spitze der Rasterkraftsonde haltbar verbunden werden. Aus der DE 198 25 404 A1 sind Herstellung und Methoden zur BefestigungNerankerung einer durch elektronenstrahlinduzierte Abscheidung aufgewachsenen EBD-Abtastspitze auf einer SPM-Sonde bekannt. Die EBD-Abtastspitze wird durch zusätzliche, ebenfalls durch elektronenstrahlinduzierte Materialabscheidung hergestellte Stützstrukturen stabilisiert, die auf der Oberfläche der Sensorspitze abgeschieden werden und die eigentliche Messspitze seitlich abstützen. Die praktische Anwendung derart hergestellter Sensoren zeigt, dass diese Befestigungsmethode die aufgewachsenen EBD-Abtastspitzen nicht ausreichend stabilisiert und dass sich die EBD-Abtastspitzen während der Messung häufig von der Oberfläche der Sensorspitze lösen.

Aus der EP 1 278 055 A1 ist ein SPM-Sensor bekannt, der an seiner Sensorspitze eine als "Carbon Nanotube" ausgebildete Abtastspitze aufweist. Die Nanotube ist in einem eigenen Verfahren hergestellt und in einem Loch des Substrates der Sensorspitze befestigt. Sie hat eine zylindrische Form mit einem typischen Durchmesser von 1 - 10 nm. Die Befestigung kann mittels einer elektronenstrahlinduzierten Beschichtung oder durch elektronenstrahlinduzierte bzw. stromflussinduzierte thermische Verschmelzung am Substrat erfolgen.

Die WO 00/19494 offenbart ein Verfahren zur Herstellung von "Nano-Hotes" in Substraten von SPM-Sensoren zur Befestigung von Carbon Nanotubes, die einen Durchmesser von 1 - 10 nm aufweisen. Dabei wird zuerst ein gegenüber dem Durchmesser der Nanotube größeres Loch erzeugt und anschließend der Durchmesser des Loches durch Beschichtung seiner Wandung an den Durchmesser der Nanotube ahgepasst.

Der vorliegenden Erfindung liegt daher die Aufgabe zu Grunde, einen SPM-Sensor vorzuschlagen, der eine höhere Stabilität und Widerstandsfähigkeit der abgeschiedenen EBD-Abtastspitzen und somit eine längere Lebensdauer aufweist.

Diese Aufgabe wird erfindungsgemäß durch einen SPM-Sensor mit den Merkmalen des Anspruchs 1 sowie durch ein Verfahren mit den Merkmalen des Anspruchs 7 gelöst. Weitere vorteilhafte Ausgestaltungen sind den jeweils rückbezogenen Unteransprüchen zu entnehmen.

Gemäß der vorliegenden Erfindung ist die EBD-Abtastspitze der Sensorspitze direkt im Substrat der Sensorspitze verankert. Die Abscheidung der EBD-Abtastspitze beginnt nicht auf der Oberfläche der Sensorspitze sondern im Innern des Substrats der Sensorspitze.

In einer vorteilhaften Ausführungsform der Erfindung ist die EBD-Abtastspitze im Substrat der Sensorspitze form- und kraftschlüssig verankert. Die Verankerung der EBD-Abtastspitze ist dadurch so stabil, dass die EBD-Abtastspitze keine zusätzlichen, seitlich angreifenden Befestigungs- oder Abstützstrukturen benötigt, die nadelförmige EBD-Abtastspitze gegen die Oberfläche der Sensorspitze abstützen.

Eine vorteilhafte Ausbildung der Erfindung sieht vor, dass die Sensorspitze ein Loch aufweist, in dem die EBD-Abtastspitze verankert ist. Die EBD-Abtastspitze greift formschlüssig in das Loch ein. Die Mantelfläche des Loches bildet ein Widerlager für die EBD-Abtastspitze und nimmt die beim Abtasten der Probe auftretenden Scherkräfte auf. Das Loch zur Verankerung der EBD-Abtastspitze kann mit der Mittelachse der Sensorspitze fluchten oder seitlich versetzt zur Mittelachse angeordnet sein.

Erfindungsgemäß erfolgt die Verankerung der EBD-Abtastspitze am Boden und/oder an den Wänden des Loches. Die EBD-Abtastspitze wird durch strahlinduzierte Abscheidung direkt im Loch hergestellt, wobei die Abscheidung auf dem Boden und an den Wänden des Loches beginnt. Somit wird eine formschlüssige Verbindung zwischen der EBD-Abtastspitze und der Sensorspitze hergestellt.

Gemäß dem Verfahren wird ein derartiger Sensor wie folgt hergestellt:

Zum Aufbau und zur Verankerung einer EBD-Abtastspitze wird ein SPM-Sensor bereitgestellt, der nach bekannten Fertigungsverfahren, meist aus Silizium oder Siliziumnitrid und Glas, jedoch auch aus Epoxidharzen, Metallen oder Kohlenstoff, hergestellt ist.

Zuerst erfolgt die Herstellung eines Loches im Substrat der Sensorspitze zur Verankerung der EBD-Abtastspitze. Zur Erzeugung des Loches sind zwei industrieübliche Herstellungsmethoden vorgesehen. Das Loch kann durch eine fotolithographische Strukturierung und einen daran anschließenden Ätzprozess oder durch Materialabtrag mittels Laser- oder Teilchenstrahlen erzeugt werden. In der Oberfläche der Sonde bzw. eines beliebigen Substrates beliebiger Geometrie wird durch die ausgewählte Methode ein Loch mit einem Durchmesser von rund 100 Nanometern (zwischen 10 und 100 Nanometern) hergestellt. Beim erstgenannten Verfahren wird der SPM-Sensor mit einer oder mehreren Schichten, bestehend beispielsweise aus Siliziumoxid und/oder Siliziumnitrid und/oder Fotolack versehen. Durch einen fotolithographischen Schritt wird auf der Sensorspitze im Fotolack eine Öffnung erzeugt. Mit einem nass- oder trockenchemischen Materialabtrag oder einem nass- und nachfolgenden trockenchemischen oder trocken- und nachfolgenden nasschemischen Materialabtrag wird das Loch zur Verankerung der EBD-Abtastspitze erzeugt. Bei der Materialbearbeitung mit Teilchenstrahlen werden geladene Elektronen oder Ionen nach ihrer Erzeugung beschleunigt und auf die Oberfläche der zu bearbeitenden Sensorspitze fokussiert. Durch die Wechselwirkung der beschleunigten Ionen mit den Atomen der Substratoberfläche, werden Atome aus der Substratoberfläche herausgetrennt. Bei gasunterstützten Prozessen induziert die Energie des Elektronenstrahls einen Ätzprozess, der zum Materialabtrag führt.

Anschließend erfolgt die Erzeugung der EBD-Abtastspitze durch eine teilchenstrahlinduzierte Materialabscheidung, beginnend im erzeugten Loch. Diese Materialabscheidung basiert auf einem gasinduzierten Prozess, der es ermöglicht, mit hoher Genauigkeit Strukturen an exakt definierten Stellen der Substratoberfläche zu erzeugen. Für den gasinduzierten Ausscheidungsprozess werden über Einlasssysteme gezielt gasförmige Stoffe zugegeben. Auf diese Weise werden über die Wahl des Ausgangsmaterials die Materialeigenschaften der aufgewachsenen Strukturen (z. B. Härte, Leitfähigkeit) bestimmt. Die Position, die Abmessungen und die Form der abgeschiedenen Struktur wird durch das Rastergebiet des Teilchenstrahls und über die Bearbeitungszeit definiert. Durch die strahleninduzierte Materialabscheidung werden Strukturen definierter Geometrie in den vorher erzeugten Löchern aufgewachsen. Die Löcher werden dabei gefüllt und bilden für die auf die Sondenspitze "aufgesetzte" EBD-Abtastspitze ein "vergrabenes" Fundament, das die Stabilität der EBD-Abtastspitze erhöht. Durch Formschluss zwischen abgeschiedener Struktur, Boden und Seitenwänden des zuvor hergestellten Loches entsteht eine stabile Verbindung zwischen der abgeschiedenen EBD-Abtastspitze und der Sensorspitze des SPM-Sensors.

Das erfindungsgemäße Verfahren ist auf beliebige Formen und auf beliebige Stellen der Abtastspitze anwendbar. Die Abtastspitze kann pyramiden-, zylinder- oder kegelförmig ausgeformt sein und kann ihrem Ende eine Spitze oder ein Plateau aufweisen. Ebenso können Strukturen auf Biegebalken ohne vorhandene Abtastspitze erzeugt werden. Der Einsatz von teilchenstrahlbasierenden Fertigungsverfahren ermöglicht sowohl bei der Herstellung der Löcher als auch bei der Abscheidung der EBD-Abtastspitzen die Herstellung von unter beliebigen Winkeln zur Sensorspitze ausgerichteten Strukturen. Neben der Grundausführung, bei der das Loch und die EBD-Abtastspitze parallel zur Mittelachse der Sensorspitze ausgerichtet sind, können auch "gekippte" Ausführungen hergestellt werden, bei denen das Loch und/oder die EBD-Abtastspitze zur Mittelachse der Sensorspitze geneigt sind. So sind beispielsweise Ausführungsformen möglich, bei denen das Loch parallel zur Mittelachse der Sensorspitze verläuft und die EBD-Abtastspitze zur Mittelachse geneigt ist, oder das Loch zur Mittelachse der Sensorspitze geneigt ist und EBD-Abtastspitze parallel zur Mittelachse verläuft, bzw. das Loch und EBD-Abtastspitze zur Mittelachse der Sensorspitze geneigt sind.

Nachfolgend wird die Erfindung anhand von Ausführungsbeispielen in Verbindung mit den begleitenden Zeichnungen näher erläutert. Es zeigen:
- Figur 1: eine perspektivische Darstellung eines SPM-Sensors mit EBD-Abtastspitze;
- Figur 2: eine schematische Darstellung der Sensorspitze des erfindungsgemäßen SPM-Sensors mit einer pyramidenförmigen Sensorspitze;
- Figur 3: eine schematische Darstellung der Sensorspitze gemäß Figur 2 mit einer zur Mittelachse der Sensorspitze versetzten EBD-Abtastspitze;
- Figur 4: eine schematische Darstellung der Sensorspitze des erfindungsgemäßen SPM-Sensors mit einer pyramidenförmigen Sensorspitze mit Plateau;
- Figur 5: eine schematische Darstellung der Sensorspitze des erfindungsgemäßen SPM-Sensors auf einem Cantilever ohne pyramidenförmige Spitze.

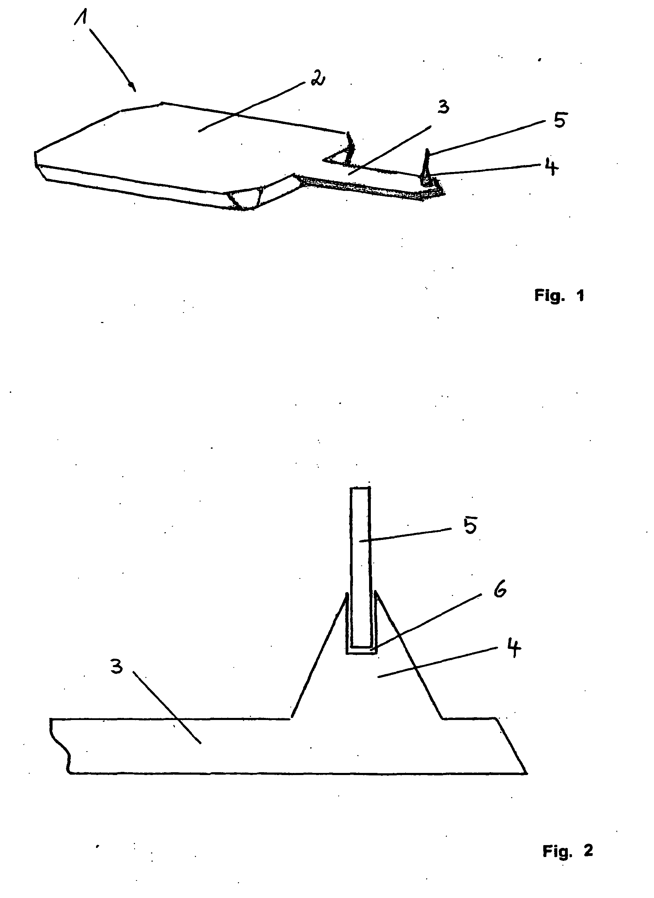

Figur 1 zeigt die schematische Darstellung eines erfindungsgemäßen SPM-Sensors in perspektivischer Ansicht. Der SPM-Sensor für ein Raster-Kraft-Mikroskop 1 umfasst einen Cantilever 3, ein Halteelement 2 an einem Ende des Cantilevers 3 und eine Sensorspitze 4 am anderen Ende des Cantilevers 3 und eine aus der Sensorspitze 4 hervorragende EBD-Abtastspitze 5. Das Halteelement 2 dient zum Aufnehmen und Befestigen des SMP-Sensors 1 an einem nicht dargestellten Messkopf eines Rasterkraftmikroskops. Der Cantilever 3 trägt die Sensorspitze 4 mit der darin verankerten EBD-Abtastspitze 5, mit der eine nicht dargestellte Oberfläche einer Probe abgetastet wird. Das Halteelement 2, der Cantilever 3 und die Sensorspitze 4 sind typischerweise einstückig aus Silizium, oder mehrstückig aus Silizium, Siliziumoxid, Siliziumnitrid, Glas, Metallen, Kohlenstoff und/oder Epoxidharzen hergestellt. Die EBD-Abtastspitze 5 greift form- und/oder materialschlüssig und kraftschlüssig in ein Loch 6 des Substrats der Sensorspitze 4 ein. Das Loch 6 wird durch Materialabtrag im Substrat der Sensorspitze 4 erzeugt. Das Loch 6 ist vorzugsweise konzentrisch und parallel zur Mittelachse der Sensorspitze 4 angeordnet und weist eine runde Form auf. Das Loch 6 kann auch versetzt zur Mittelachse der Sensorspitze 4 und/oder geneigt zur Mittelachse der Sensorspitze 4 verlaufen.

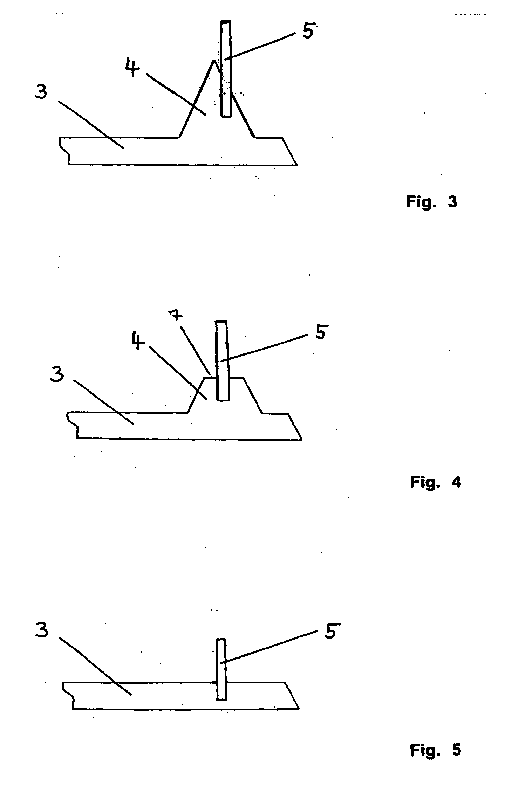

Die Figur 3 zeigt eine Ausführungsform, bei welcher die EBD-Abtastspitze 5 zur Mittelachse der Sensorspitze 4 versetzt angeordnet ist.

In Figur 4 wird eine Sensorspitze 4 dargestellt, die ein Plateau 7 aufweist. Das Loch 6 und die EBD-Abtastspitze 5 sind auf dem Plateau 7 des SPM-Sensors 1 angeordnet.

Figur 5 zeigt eine Ausführungsform ohne Sensorspitze 4, bei welcher die EBD-Abtastspitze 5 direkt im Substrat des Cantilevers 3 verankert ist.

## Patentansprüche

1. SPM-Sensor (1) mit einem Cantilever (3), einem Halteelement (2) an einem Ende des Cantilevers (3) und einer Sensorspitze (4) am anderen Ende des Cantilevers (3) und mit einer aus der Sensorspitze (4) hervorragenden, zumindest teilweise zylindrischen EBD-Abtastspitze (5), **dadurch gekennzeichnet, dass** die EBD-Abtastspitze (5) direkt im Substrat der Sensorspitze (4) verankert ist.

2. SPM-Sensor nach Anspruch 1, **dadurch gekennzeichnet, dass** die EBD-Abtastspitze (5) im Substrat der Sensorspitze (4) form- und kraftschlüssig verankert ist.

3. SPM-Sensor nach Anspruch 1 oder Anspruch 2, **dadurch gekennzeichnet, dass** die Sensorspitze (4) ein Loch (6) aufweist, in dem die EBD-Abtastspitze (5) verankert ist.

4. SPM-Sensor nach Anspruch 3, **dadurch gekennzeichnet, dass** das Loch (6) für die Verankerung der EBD-Abtastspitze (5) zur Mittelachse der Sensorspitze (4) versetzt angeordnet ist.

5. SPM-Sensor nach Anspruch 3 oder Anspruch 4, **dadurch gekennzeichnet, dass** die Verankerung der EBD-Abtastspitze (5) am Boden und/oder an den Wänden des Loches (6) erfolgt.

6. SPM-Sensor nach Anspruch 1 und Anspruch 2, **dadurch gekennzeichnet, dass** die EBD-Abtastspitze (5) durch strahlinduzierte Abscheidung direkt im Loch (6) hergestellt ist.

7. Verfahren zur Herstellung eines SPM-Sensors mit einem Cantilever (3), einem Halteelement (2) an einem Ende des Cantilevers (3) und einer Sensorspitze (4) am anderen Ende des Cantilevers (3) und mit einer aus der Sensorspitze (4) hervorragenden, zumindest teilweise zylindrischen EBD-Abtastspitze (5), mit folgenden Prozessschritten:
a) Bereitstellung eines SPM-Sensors ohne EBD-Abtastspitze,
b) Herstellung eines Loches durch Materialabtrag im Substrat des SPM-Sensors, und
c) Erzeugung einer EBD-Abtastspitze durch eine teilchenstrahlinduzierte Materialabscheidung, **dadurch gekennzeichnet, dass** die Materialabscheidung zur Erzeugung der EBD-Abtastspitze (5) am Boden des hergestellten Loches (6) beginnt, wodurch die EBD-Abtastspitze (5) direkt im Substrat der Sensorspitze (4) verankert wird.

## Claims

1. An SPM sensor (1) with a cantilever (3), a holding element (2) at one end of the cantilever (3) and a sensor tip (4) at the other end of the cantilever (3) and with an at least partially cylindrical EBD scanning tip (5) protruding from the sensor tip (4), wherein the EBD scanning tip (5) is anchored directly in the substrate of the sensor tip (4).

2. The SPM sensor as claimed in claim 1, wherein the EBD scanning tip (5) is anchored in the substrate of the sensor tip (4) with positive and nonpositive engagement.

3. The SPM sensor as claimed in claim 1 or claim 2, wherein the sensor tip (4) has a hole (6), in which the EBD scanning tip (5) is anchored.

4. The SPM sensor as claimed in claim 3, wherein the hole (6) for the anchoring of the EBD scanning tip (5) is arranged offset in relation to the center axis of the sensor tip (4).

5. The SPM sensor as claimed in claim 3 or claim 4, wherein the anchoring of the EBD scanning tip (5) takes place on the bottom and/or the walls of the hole (6).

6. The SPM sensor as claimed in claim 1 and claim 2, wherein the EBD scanning tip (5) is produced by beam induced deposition directly in the hole (6).

7. A method for producing an SPM sensor with a cantilever (3), a holding element (2) at one end of the cantilever (3) and a sensor tip (4) at the other end of the cantilever (3) and with an at least partially cylindrical EBD scanning tip (5) protruding from the sensor tip (4), with the following process steps:
a) provision of an SPM sensor without an EBD scanning tip,
b) production of a hole by material removal in the substrate of the SPM sensor, and
c) creation of an EBD scanning tip by particle beam induced material deposition, wherein the material deposition for creating the EBD scanning tip (5) begins on the bottom of the hole (6) that has been produced, whereby the EBD scanning tip (5) is anchored directly in the substrate of the sensor tip (4).

## Revendications

1. Sonde pour SPM comprenant un cantilever ou micropoutre en porte à faux (3), un élément de retenue (2) à une extrémité du cantilever (3) et une pointe de sonde (4) à l'autre extrémité du cantilever (3) et comprenant une pointe d'exploration EBD (5) au moins partiellement cylindrique faisant saillie de la pointe de sonde (4), **caractérisée par le fait que** la pointe d'exploration EBD (5) est directement ancrée dans le substrat de la pointe de sonde (4).

2. Sonde pour SPM selon la revendication 1, **caractérisée par le fait que** la pointe d'exploration EBD (5) est ancrée par adhérence et complémentarité de forme dans le substrat de la pointe de sonde (4).

3. Sonde pour SPM selon la revendication 1 ou la revendication 2, **caractérisée par le fait que** la pointe de sonde (4) présente un trou (6) dans lequel la pointe d'exploration EBD (5) est ancrée.

4. Sonde pour SPM selon la revendication 3, **caractérisée par le fait que** le trou (6) pour l'ancrage de la pointe d'exploration EBD (5) est disposé de manière décalée par rapport à l'axe médian de la pointe de sonde (4).

5. Sonde pour SPM selon la revendication 3 ou la revendication 4, **caractérisée par le fait que** l'ancrage de la pointe d'exploration EBD (5) s'effectue sur le fond et/ou les parois du trou (6).

6. Sonde pour SPM selon la revendication 1 et la revendication 2, **caractérisée par le fait que** la pointe d'exploration EBD (5) est réalisée directement dans le trou (6) par dépôt induit par faisceau.

7. Procédé de fabrication d'une sonde pour SPM comprenant un cantilever ou micropoutre en porte à faux (3), un élément de retenue (2) à une extrémité du cantilever (3) et une pointe de sonde (4) à l'autre extrémité du cantilever (3) et comprenant une pointe d'exploration EBD (5) au moins partiellement cylindrique faisant saillie de la pointe de sonde (4), présentant les étapes de procédé suivantes :
a) mise à disposition d'une sonde pour SPM sans pointe d'exploration EBD,
b) réalisation d'un trou par enlèvement de matière dans le substrat de la sonde pour SPM et
c) production d'une pointe d'exploration EBD par dépôt de matière induit par faisceau de particules, **caractérisée par le fait que** le dépôt de matière destiné à produire la pointe d'exploration EBD (5) commence au fond du trou (6) réalisé, moyennant quoi la pointe d'exploration EBD (5) est directement ancrée dans le substrat de la pointe de sonde (4).
